# EUROPÄISCHE PATENTSCHRIFT

(11) **EP 2 234 853 B1**
(45) Veröffentlichungstag und Bekanntmachung des Hinweises auf die Patenterteilung: **19.04.2017**
(21) Anmeldenummer: 08870804.5
(22) Anmeldetag: 14.11.2008
(51) Int. Cl.: B60T 8/48, B60L 7/26

(54) **Bremssystem**
Braking system
Système de freinage

(30) Priorität: 14.01.2008 DE 102008004201
(43) Veröffentlichungstag der Anmeldung: 06.10.2010
(73) Patentinhaber: Robert Bosch GmbH, 70442 Stuttgart (DE)
(72) Erfinder: WUERTH, Gebhard, 74429 Sulzbach-Laufen (DE); MEHL, Volker, 76356 Weingarten (DE); KUNZ, Michael, 71711 Steinheim An Der Murr (DE); LEIBLEIN, Matthias, 70839 Gerlingen (DE); QUIRANT, Werner, 71717 Beilstein (DE)
(86) Internationale Anmeldenummer: PCT/EP2008/065519
(87) Internationale Veröffentlichungsnummer: WO 2009/089944

(56) Entgegenhaltungen:
- EP-A- 0 388 634
- WO-A-95/31362
- WO-A1-00/74987
- WO-A1-94/25322
- DE-A1- 4 106 336
- DE-A1- 19 905 660
- JP-A- 2006 137 221

## Beschreibung

Die vorliegende Erfindung betrifft ein Bremssystem für ein Kraftfahrzeug. Des Weiteren betrifft die vorliegende Erfindung ein Verfahren zum Steuern eines Bremssystems für ein Kraftfahrzeug.

### Stand der Technik

Hybridfahrzeuge weisen ein Bremssystem auf, welches für ein rekuperatives Bremsen ausgelegt ist. Bei dem rekuperativen Bremsen wird ein Elektromotor des Hybridfahrzeugs, in der Regel der elektrische Antriebsmotor, generatorisch betrieben. Die bei dem rekuperativen Bremsen gewonnene elektrische Energie wird nach einem Zwischenspeichern vorzugsweise für ein Beschleunigen des Fahrzeugs verwendet. Auf diese Weise wird eine Verlustleistung, welche ein herkömmliches Fahrzeug bei einem häufigen Bremsen während einer Fahrt aufweist, reduziert. Dies reduziert den Energieverbrauch und die Schadstoffemission des Hybridfahrzeugs verglichen mit dem herkömmlichen Fahrzeug.

Damit das rekuperative Bremsen möglichst geringe Auswirkungen auf den Bremsweg des Fahrzeugs hat, muss das Bremssystem des Fahrzeugs an bestimmte Situationen angepasst werden. Beispielsweise sollte das Bremssystem bei einem vollen elektrischen Energiespeicher das gesamte Bremsmoment über die konventionelle Bremse, insbesondere über mindestens eine Reibungsbremse, aufbringen, da in einer derartigen Situation die rekuperative Bremse meistens kein Bremsmoment auf die Räder ausübt.

Des Weiteren setzt das generatorische Betreiben des Elektromotors in der Regel eine bestimmte Mindestgeschwindigkeit des Fahrzeugs voraus. Ein rekuperatives Bremssystem ist deshalb häufig nicht in der Lage, so lange ein Bremsmoment auf die Räder eines Fahrzeugs auszuüben, bis sich das zuvor fahrende Fahrzeug im Stillstand befindet. Bei einem Anhalten eines Fahrzeugs muss daher das konventionelle Bremssystem im niedrigen Geschwindigkeitsbereich die wegfallende Bremswirkung der rekuperativen Bremse durch ein höheres Bremsmoment kompensieren.

Andererseits ist es in manchen Situationen wünschenswert, eine möglichst niedrige hydraulische Bremskraft auf die Räder auszuüben, um einen hohen Rekuperationsgrad zu erzielen. Beispielsweise wird nach Schaltvorgängen häufig der abgekoppelte Generator als rekuperative Bremse eingeblendet, um die Bremswirkung wieder in Richtung rekuperative Bremse zu verschieben. Soll das Gesamtbremsmoment dabei konstant gehalten werden, so muss der Anteil der konventionellen Reibungsbremse entsprechend reduziert werden.

Vorgänge, bei welchen das Bremsmoment der konventionellen Reibungsbremse an das aktuelle Bremsmoment der rekuperativen Bremse angepasst wird, um ein gewünschtes Gesamtbremsmoment einzuhalten, werden häufig als Verblend-Vorgänge bezeichnet. Bei vielen Fahrzeugen mit einer rekuperativen Bremse erfolgt das Verblenden über eine Betätigung des Bremseingabeelements durch den Fahrer. Der Fahrer Übernimmt dabei die Aufgabe des Verzögerungsreglers. Bei einem entfallenden oder hinzukommenden rekuperativen Bremsmoment passt der Fahrer in diesem Fall das konventionelle Bremsmoment über das Pedal so an, dass eine vom Fahrer gewünschte Gesamtverzögerung eingehakten wird. Allerdings erfordert dieser Vorgang einen höheren Arbeitsaufwand von Seiten des Fahrers.

Eine weniger arbeitsaufwendige Möglichkeit zum Regeln einer Gesamtverzögerung eines Fahrzeugs bieten Brake-by-Wire Bremssysteme, wie beispielsweise EHB-Systeme. Durch eine Entkoppelung des Pedals kann bei einem Brake-by-Wire Bremssystem das Verblenden der Bremsmomente erfolgen, ohne dass der Fahrer dazu eine zusätzliche Betätigung des Pedals oder eines anderen Brenis-Eingabeelements ausführen muss. Der Fahrer bemerkt deshalb bei einem Brake-by-Wire Bremssystem die Verblendvorgänge kaum. Aufgrund ihrer aufwendigen Elektronik und Mechanik/Hydraulik sind herkömmliche Brake-by-Wire Bremssysteme jedoch teuer.

Die DE 199 05 660 A1 beschreibt ein elektronisch regelbares Bremsbetätigungssystem mit zwei Bremskreisen, die jeweils über je ein Trennventil an einem Hauptbremszylinder des Bremsbetätigungssystems so angebunden sind, dass der jeweils zugeordnete Bremskreis über ein Schließen mindestens eines der Trennventile vom Hauptbremszylinder abkoppelbar ist. Außerdem ist jeder der Bremskreise über je ein weiteres Trennventil und ein gemeinsames stetig stellbares Ventil an ein Bremsflüssigkeitsreservoir des elektronisch regelbaren Bremsbetätigungssystems angebunden.

Die in der WO 94/25322 beschriebene Bremsanlage für Kraftfahrzeuge mit elektronischem Antrieb hat auch einen an einem Bremsflüssigkeitsreservoir angebundenen Bremskreis, so dass über ein Betreiben einer Pumpe des jeweiligen Bremskreises Bremsflüssigkeit in dessen Radbremszylinder pumpbar ist.

Bei der elektronisch regelbaren Bremsanlage der WO 00/74987 A1 ist jeder Bremskreis über je ein Ventil an dem Hauptbremszylinder angebunden, welches je eine parallel geführte Bypassleitung mit einem Rückschlagventil aufweist. Aufgrund einer Ausrichtung des Rückschlagventils bleibt auch nach einem Schließen des Ventils gewährleistet, dass ein in dem Hauptbremszylinder aufgebautes Drucksignal über das Rückschlagventil und die Bypassleitung an den jeweils angebundenen Radbremszylinder weitergeleitet wird.

### Offenbarung der Erfindung

Die Erfindung schafft ein Bremssystem für ein Fahrzeug mit den Merkmalen des Anspruchs 1.

Unter dem Drucksignal ist dabei eine von dem Hauptbremszylinder an den mindestens einen ersten Radbremszylinder weitergegebene Leitung oder ein weitergeleiteter Druck zu verstehen. Mittels dieser weitergegebenen Leistung wird der erste Radbremszylinder dazu gebracht, ein Bremsmoment auf das ihm zugeordnete erste Rad auszuüben. Der erste Bremskreis umfasst dabei mindestens den ersten Radbremszylinder. Erfindungsgemäß hat der erste Bremskreis noch mindestens einen weiteren Radbremszylinder, welcher mindestens einem weiteren Rad zugeordnet ist.

Die vorliegende Erfindung basiert auf der Erkenntnis, dass es für ein Verblenden einer rekuperativen Bremse und einer konventionellen Reibungsbremse vorteilhaft ist, wenn sich ein erster Bremskreis eines Bremssystems von dem Hauptbremszylinder abkoppeln lässt. In diesem Fall steuert der Fahrer den ersten Bremskreis nicht mehr direkt über das Bremspedal und den Hauptbremszylinder. Nach dem Abkoppeln des ersten Bremskreises von dem Hauptbremszylinder ist es zusätzlich vorteilhaft, über eine Möglichkeit zu verzügen, um den mindestens einen ersten Radbremszylinder des ersten Bremskreises auf eine zweite Weise, bei welcher das Verblenden berücksichtigt wird, anzusteuern. Die Erfindung beruht außerdem auf der Erkenntnis, wie sich die in dem oberen Absatz beschriebenen Möglichkeiten auf kostengünstige Weise realisieren lassen. Dazu wird ein Trennventil zwischen dem Hauptbremszylinder und dem ersten Radbremszylinder angeordnet, welches durch ein Schließen das Weiterleiten des Drucksignals an den ersten Radbremszylinder verhindert und somit den ersten Radbremszylinder von dem Hauptbremszylinder abkoppelt. Des Weiteren wird der erste Bremskreis direkt an das Bremsmediumreservoir angeschlossen und ein Steuerventil so nahe an dem Anschluss des ersten Bremskreises an dem Bremsmediumreservoir angeordnet, dass ein Zufluss des Bremsmediums von dem Bremsmediumreservoir zu dem ersten Radbremszylinder durch das Steuerventil steuerbar ist. Auf diese Weise kann ein Bremsdruck an dem ersten Radbremszylinder mittels des Steuerventils gesteuert werden. Das Steuerventil steuert in diesem Fall auch die Kraft, welcher der erste Radbremszylinder auf das erste Rad ausübt. Das auf das erste Rad ausgeübte Bremsmoment kann somit mittels des Steuerventils gesteuert werden.

Damit besteht die Möglichkeit, mittels eines Sensors oder mittels Schätzung zu ermitteln, welches Gesamtbremsmoment von dem Fahrer gewünscht wird, welches aktuelle rekuperative Bremsmoment durch die rekuperative Bremse ausgeübt wird, welches hydraulische Bremsmoment durch das konventionelle Bremssystem anliegt und welche Differenz zwischen dem gewünschten Gesamtbremsmoment und dem aktuellen rekuperativen Bremsmoment noch besteht. Das der ermittelten Differenz entsprechende Bremsmoment kann anschließend mittels des Steuerventils auf das erste Rad ausgeübt werden. Dies ermöglicht ein Verblenden, ohne dass der Fahrer dazu einen zusätzlichen Arbeitsaufwand ausführen muss. Eine ausreichende Rekuperationseffizienz ist somit zu vertretbaren Kosten gewährleistet.

Die vorliegende Erfindung ist jedoch nicht nur auf eine Anwendung an einem Hybridfahrzeug beschränkt. Beispielsweise lässt sich auch eine querbeschleunigungsabhängige Bremskraftverteilung mittels der vorliegenden Erfindung realisieren. Bei einer querbeschleunigungsabhängigen Bremskraftverteilung wird die Bremskraft an einigen Rädern des Fahrzeugs, vorzugsweise an den beiden Hinterachsenrädern, entsprechend einer Aufstandskraft, welche bei einer Fahrt um eine Kurve auftritt, aufgeteilt. Auf diese Weise kann der Reibwert der Räder, vor allem der Reibwert der beiden Hinterräder, an die Querbeschleunigung angeglichen werden. Das Fahrzeug bremst somit in Kurven stabiler. Vorzugsweise wird zum Ermitteln eines auf ein Rad des Fahrzeugs auszuübenden Bremsmoments eine von einer Sensoreinrichtung ermittelte Querbeschleunigung herangezogen.

Zusätzlich bietet sich eine Verwendung der vorliegenden Erfindung für ein dynamisches Kurvenbremsen an. Bei dem dynamischen Kurvenbremsen wird die Bremskraft an einem kurveninneren Rad gegenüber der Bremskraft an einem kurvenäußeren Rad erhöht. Dies erzielt ein dynamischeres Fahrverhalten.

Des Weiteren kann die Erfindung auch für ein vorteilhafteres Bremsen während einer Rückwärtsfahrt verwendet werden. Insbesondere wird dabei durch eine Erhöhung der Bremskraft an der Hinterachse eine für eine Rückwärtsfahrt bessere Bremskraftverteilung eingestellt. Man spricht dabei auch von einer Rückwärts-Bremskraftverteilung. Vor Allem bei einer langsamen Rückwärtsfahrt bergab ermöglicht dies ein deutlich stabileres Bremsverhalten.

Wie aus den oberen Absätzen hervorgeht, ist die Anwendung der vorliegenden Erfindung somit nicht nur auf Hybridfahrzeuge beschränkt. Stattdessen kann das Bremsverhalten von anderen Fahrzeugtypen ebenfalls über die vorliegende Erfindung verbessert werden. Um die in den oberen Absätzen beschriebenen Möglichkeiten zu realisieren, wird der erste Bremskreis von dem Hauptbremszylinder abgekoppelt. Der mindestens eine erste Radbremszylinder des ersten Bremskreises wird dann so mittels des Steuerventils gesteuert, dass ein der aktuellen Fahrsituation angepasstes Bremsmoment auf das mindestens einen ersten Rad ausgeübt wird.

Des Weiteren gewährleistet die vorliegende Erfindung eine Möglichkeit zur Verbesserung des Pedalgefühls durch eine Abkopplung des ersten Bremskreises, so dass der Fahrer den ersten Bremskreis nicht mehr direkt über eine auf das Bremspedal ausgeübte Kraft steuern muss. Auf diese Weise lässt sich auch der Pedalweg verkürzen. Die vorliegende Erfindung bietet eine einfach betätigbare und kostengünstige Alternative zu einem herkömmlichen Brake-by-Wire Bremssystem, welche insbesondere für heck- oder allradgetriebene Fahrzeuge sehr vorteilhaft ist. Die Erfindung ist jedoch auch für den Frontantrieb mit einer by-wire Vorderradachse einsetzbar.

In einer erfindungsgemäßen Ausführungsform ist zwischen dem zweiten Eingang des ersten Bremskreises und dem Steuerventil ein erster Verzweigungspunkt angeordnet, wobei der erste Radbremszylinder so an den ersten Verzweigungspunkt angekoppelt ist, dass ein Abfluss des Bremsmediums von dem ersten Radbremszylinder zu dem Bremsmediumreservoir an dem Steuerventil vorbei geleitet wird. Da in dem Bremsmediumreservoir in der Regel nur ein vergleichsweise geringer Innendruck herrscht, wirkt dem einströmenden Bremsmedium kaum eine Kraft entgegen. Die beschriebene Ausführungsform ermöglicht damit ein schnelles Abbauen eines Bremsdrucks am ersten Radbremszylinder. Bevorzugterweise ist dabei zwischen dem ersten Verzweigungspunkt und dem ersten Radbremszylinder ein Radauslassventil angeordnet, welches dazu ausgelegt ist, den Abfluss des Bremsmediums von dem ersten Radbremszylinder vorbei an dem Steuerventil zu dem Bremsmediumreservoir zu steuern.

In einer weiteren erfindungsgemäßen Ausführungsform sind ein Ausgang des Steuerventils und ein Ausgang des Trennventils an einem zweiten Verzweigungspunkt angekoppelt, wobei zwischen dem zweiten Verzweigungspunkt und dem ersten Radbremszylinder ein erstes Radeinlassventil angeordnet ist, welches dazu ausgelegt ist, einen Zufluss des Bremsmediums von dem zweiten Verzweigungspunkt an den ersten Radbremszylinder zu steuern. Auf diese Weise lässt sich das Aufbauen eines Bremsdrucks an dem ersten Radbremszylinder verlässlich steuern.

In einer erfindungsgemäßen Weiterbildung ist zwischen dem zweiten Eingang des ersten Bremskreises und dem Steuerventil ein dritter Verzweigungspunkt angeordnet, an welchem eine Saugseite einer weiteren Pumpe angekoppelt ist, wobei die Förderseite der weiteren Pumpe an das erste Radeinlassventil angekoppelt ist. Die weitere Pumpe ist für einen brake-by-wire Druckaufbau im Einsatz.

Der Fahrer hat die Möglichkeit, über eine Betätigung des Bremseingabeelements direkt in den zweiten Bremskreis einzubremsen. Zum Erfassen des Fahrerbremswunsches können weitere Sensoren an das Bremssystem angeschlossen sein.

In einer Weiterbildung der Erfindung weist das Bremssystem einen Motor auf, welcher in einer ersten Drehrichtung und in einer zweiten Drehrichtung betreibbar ist, wobei bei einem Betreiben des Motors in der ersten Drehrichtung die weitere Pumpe durch den Motor betreibbar und die Pumpe von dem Motor abgekoppelt ist und bei einem Betreiben des Motors in der zweiten Drehrichtung die Pumpe und die weitere Pumpe durch den Motor betreibbar sind. Somit lässt sich ein automatisches Mitbetreiben der Pumpe bei einem notwendigen Betreiben der weiteren Pumpe mittels des Motors verhindern.

In einer weiteren bevorzugten Weiterbildung ist der zweite Bremskreis in einen ersten Zustand und in einen zweiten Zustand schaltbar, welche so ausgebildet sind, dass ein Antreiben der Pumpe des in den ersten Zustand geschalteten zweiten Bremskreises eine Druckänderung an dem zweiten Radbremszylinder bewirkt und ein Antreiben der Pumpe des in den ersten Zustand geschalteten zweiten Bremskreises einen Kreisstrom des Bremsmediums in dem zweiten Bremskreis bewirkt. Dies ist beispielsweise realisierbar, indem der zweite Bremskreis ein zwischen dem zweiten Umschaltventil und der Pumpe angeordnetes Rückschlagventil und ein parallel zu der Pumpe angeordnetes Ventil aufweist, wobei der zweite Bremskreis mittels eines Schließen des Ventils in den ersten Zustand und mittels eines Öffnen des Ventils in den zweiten Zustand schaltbar ist. Dies gewährleistet eine weitere Möglichkeit um ein nichtgewünschtes Mitbetreiben der Pumpe bei einem Antreiben der weiteren Pumpe mittels des Motors zu verhindern.

### Kurze Beschreibung der Zeichnungen

Weitere Merkmale und Vorteile der Erfindung werden nachfolgend anhand der Figuren erläutert. Es zeigen:
- Fig. 1: zeigt einen Schaltplan einer ersten Ausführungsform des Bremssystems;
- Fig. 2: zeigt einen Schaltplan einer zweiten Ausführungsform des Bremssystems; und
- Fig. 3: zeigt einen Schaltplan einer dritten Ausführungsform des Bremssystems.

### Ausführungsformen der Erfindung

Das in den folgenden Absätzen beschriebene Bremssystem ist nicht nur in einem Hybridfahrzeug einsetzbar. Stattdessen kann das Bremssystem auch in konventionellen Fahrzeugen eingesetzt werden, um beispielsweise eine bevorzugte Bremskraftverteilung an den Rädern des Fahrzeugs bei einem Bremsen während einer Kurvenfahrt und/oder einer Rückwärtsfahrt zu gewährleisten.

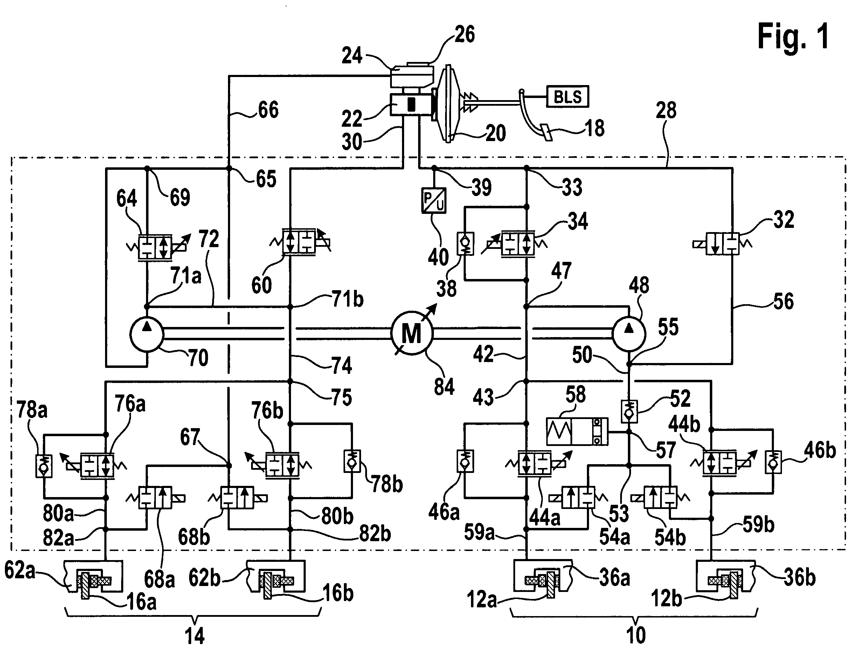

Fig. 1 zeigt einen Schaltplan einer ersten Ausführungsform des Bremssystems.

Das in Fig. 1 dargestellte Bremssystem umfasst einen vorderen Bremskreis 10 zum Abbremsen der Vorderräder 12a und 12b und einen hinteren Bremskreis 14 zum Abbremsen der Hinterräder 16a und 16b. Das dargestellte Beispiel ist jedoch nicht auf diese Aufteilung der Räder 12a, 12b, 16a und 16b beschränkt. Selbstverständlich ist das Beispiel auch auf eine Ausführungsform anwendbar, bei welcher die Räder 12a und 12b Hinterräder und die Räder 16a und 16b Vorderräder eines Fahrzeugs sind. Die Räder 12a und 12b und die Räder 16a und 16b können auch 2 Paare von Rädern sein, welche auf zwei verschiedenen Seiten eines Fahrzeugs oder diagonal an einem Fahrzeug angeordnet sind.

Es wird hier ausdrücklich daraufhingewiesen, dass das in Fig. 1 dargestellten Bremssystem nicht auf die feste Anzahl von vier Rädern 12a, 12b, 16a und 16b beschränkt ist. Stattdessen kann das Bremssystem so erweitert werden, dass es größere Anzahl von Rädern steuert. Beispielsweise weist das Bremssystem dann mindestens zwei Bremskreise auf, welche dem vorderen Bremskreis 10 entsprechen.

Zum Eingeben eines Bremswunsches an das Bremssystem durch den Fahrer umfasst das Bremssystem ein Bremspedal 18. An dem Bremspedal 18 kann ein Pedalwegsensor, ein Booster-Membranwegsensor und/oder ein Stangenwegsensor angebracht sein. Als Alternative oder als Ergänzung zu dem Bremspedal 18 kann das Bremssystem zur Erfassung eines Bremswunsches jedoch auch ein anderes Bremseingabeelement umfassen.

Das Bremspedal 18 ist über einen Bremskraftverstärker 20 mit einem Hauptbremszylinder 22 verbunden. An dem Hauptbremszylinder 22 ist ein Bremsmediumreservoir 24, beispielsweise ein Hydraulikfluidbehälter, angebracht. Das Bremsmediumreservoir 24 ist über einen Einfüllstutzen 26 mit einer Bremsflüssigkeit befüllbar.

Das Bremsmediumreservoir 24 ist so an den Hauptbremszylinder 22 angeschlossen, dass eine Bremsflüssigkeit aus dem Hauptbremszylinder 22 in das Bremsmediumreservoir 24 fließen kann. Ebenso kann die Bremsflüssigkeit bei einem entsprechenden Druckverhältnis aus dem Bremsmediumreservoir 24 in den Hauptbremszylinder 22 strömen.

An dem Hauptbremszylinder 22 ist eine erste Zufuhrleitung 28 für den vorderen Bremskreis 10 und eine zweite Zufuhrleitung 30 für den hinteren Bremskreis 14 angebracht. Die erste Zufuhrleitung 28 verläuft zwischen dem Hauptbremszylinder 22 und einem Hochdruckschaltventil 32 des vorderen Bremskreises 10. Über einen Verzweigungspunkt 33 ist zusätzlich ein Umschaltventil 34 an die Zufuhrleitung 28 angeschlossen. Ein vom Hauptbremszylinder 22 ausgehender Bremsflüssigkeitsstrom kann somit über die Zufuhrleitung 28 wahlweise über das Hochdruckschaltventil 32 oder über das Umschaltventil 34 in Richtung der Radbremszylinder der Bremszangen 36a und 36b der Räder 12a und 12b fließen.

Parallel zu dem Umschaltventil 34 ist eine Bypassleitung mit einem Rückschlagventil 38 angeordnet. Das Rückschlagventil 38 gewährleistet bei einer Fehlfunktion des Umschlagventils 34, welche sonst die hydraulische Verbindung zwischen dem Hauptbremszylinder 22 und den Radbremszylindern der Bremszangen 36a und 36b durch das Umschaltventil 34 unterbrechen würde, ein Weiterbestehen der hydraulischen Verbindung zwischen dem Hauptbremszylinder 22 und den Radbremszylindern der Bremszangen 36a und 36b. Somit können die Bremszangen 36a und 36b auch während eines Ausfalls des Umschaltventils 34 mittels des Bremspedals 18 angesteuert werden.

Über einen Verzweigungspunkt 39 ist auch ein Drucksensor 40 an die Zufuhrleitung 28 angeschlossen. Der Drucksensor 40 ist dazu ausgelegt, einen Druck der Bremsflüssigkeit im vorderen Bremskreis 10 zu ermitteln.

Von einer der Zufuhrleitung 28 abgewandten Seite des Umschaltventils 34 verläuft eine Leitung 42 zu einem Radeinlassventil 44a, welches dem Radbremszylinder der Bremszange 36a zugeordnet ist. Über einen Verzweigungspunkt 43 ist ein dem Radbremszylinder der Bremszange 36b zugeordnetes Radeinlassventil 44b ebenfalls an der Leitung 42 angeschlossen. Parallel zu den Radeinlassventilen 44a und 44b sind Bypassleitungen mit Rückschlagventilen 46a oder 46b angeordnet.

Des Weiteren ist eine Förderseite einer Pumpe 48 über einen Verzweigungspunkt 47 an der Leitung 42 angeschlossen. Die Pumpe 48 ist in einer bevorzugten Ausführungsform eine Einkolbenpumpe. Für die Pumpe 48 kann jedoch auch eine Pumpe mit mehreren Kolben, eine asymmetrische Pumpe oder eine Zahnradpumpe verwendet werden.

Von einer Saugseite der Pumpe 48 verläuft eine Leitung 50 über ein Rückschlagventil 52 zu einem Verzweigungspunkt 53, an welchen die Radauslassventile 54a und 54b angekoppelt sind. Über einen Verzweigungspunkt ist auch eine Leitung 56, welche zu dem Hochdruckschaltventil 32 führt, an die Leitung 50 angeschlossen. Des Weiteren ist eine Speicherkammer 58 über einen Verzweigungspunkt 57 zwischen dem Rückschlagventil 52 und dem Verzweigungspunkt 53 mit der Leitung 50 verbunden.

Die Radauslassventile 54a und 54b sind jeweils einem Radbremszylinder einer Bremszange 36a oder 36b zugeordnet. Dazu sind die Radauslassventile 54a und 54b über je eine Leitung 59a oder 59b mit den Radbremszylindern der Bremszangen 36a oder 36b verbunden. Über je einen Verzweigungspunkt ist auch das der jeweiligen Radbremszange 36a oder 36b zugeordnete Radeinlassventil 44a oder 44b an die entsprechende Leitung 59a oder 59b angekoppelt.

Die Ventile 32, 34, 46a, 46b, 54a und 54b des vorderen Bremskreises 10 können als Hydraulikventile ausgebildet sein. Vorzugsweise sind das Umschaltventil 34 und die Radeinlassventile 44a und 44b als stromlos offene Ventile und das Hochdruckschaltventil 32 und die Radauslassventile 54a und 54b als stromlos geschlossene Ventile ausgebildet. Ein fahrerseitig angeforderter Druckaufbau in den Radbremszylindern der Bremszangen 36a und 36b ist somit im normalen Bremsbetrieb des Bremssystems 10 sicher gewährleistet ist. Entsprechend kann der aufgebaute Druck in den Radbremszylindern der Bremszangen 36a und 36b auch schnell wieder abgebaut werden. Der vordere Bremskreis 10 entspricht somit einer Standard ESP-Hydraulik.

Die Zufuhrleitung 30 verbindet den Hauptbremszylinder 22 mit einem Trennventil 60 des hinteren Bremskreises 14. Im Gegensatz zu dem Umschaltventil 34 des vorderen Bremskreises 10 ist parallel zu dem Trennventil 60 des hinteren Bremskreises 14 keine Bypassleitung mit einem Rückschlagventil angeordnet. Die Zufuhrleitung 30 weist zudem keinen Verzweigungspunkt auf, welcher eine andere Komponente des hinteren Bremskreises 14 an die Zufuhrleitung 30 ankoppelt. Der hintere Bremskreis 14 ist somit so ausgebildet, dass bei einem Schließen des Trennventils 60 der hintere Bremskreis 14 vom Hauptbremszylinder 22 abgekoppelt wird. Ein Durchgriff vom Hauptbremszylinder 22 an die Bremszangen 62a und 62b ist bei einem geschlossenen Trennventil 60 nicht mehr möglich. Somit besteht über das Trennventil 60 die Möglichkeit, in einer Situation, in welcher dies gewünscht wird, den hinteren Bremskreis 14 mit den Bremszangen 62a und 62b der Räder 16a und 16b von dem Hauptbremszylinder 22 (und dem Bremspedal 18) abzukoppeln.

Der hintere Bremskreis 14 umfasst ein Druckstellventil 64, welches außer in seinem geschlossenen Zustand und in seinem geöffneten Zustand noch in mindestens einen zwischen dem geschlossenen und dem geöffneten Zustand liegenden Zwischenzustand verstellbar ist. Das Druckstellventil 64 ist in diesem Zwischenzustand nur teilweise geöffnet. Erfindungsgemäß ist das Druckstellventil 64 ein stetig stellbares, stromlos geschlossenes Ventil. Man kann ein derartiges Ventil auch als PCV-Ventil (Pressure Control Valve) bezeichnen. Demgegenüber kann für den vorderen Bremskreis 10 ein kostengünstiges Hochdruckschaltventil 32 verwendet werden, welches sich lediglich in den geöffneten oder in den geschlossenen Zustand einstellen lässt.

Des Weiteren ist das Druckstellventil 64 über einen Verzweigungspunkt 65 an eine Leitung 66 angeschlossen, welche zum Bremsmediumreservoir 24 führt. Aufgrund der direkten Ankopplung des Druckstellventils 64 an das Bremsmediumreservoir 24 kann ein in dem hinteren Bremskreis 14 aufgebauter Bremsdruck schneller abgebaut werden.

In dem vorderen Bremskreis 10 kann ein Abbauen eines aufgebauten Bremsdrucks durch Einfüllen der Bremsflüssigkeit in die Speicherkammer 58 erfolgen. Dabei muss eine Mindestkraft aufgebracht werden, welche groß genug ist, um die Bremsflüssigkeit gegen einen in der Speicherkammer 58 herrschenden Druck in die Speicherkammer 58 hinein zu pressen. Dies Verlangsamt den Abbau des Bremsdrucks in dem vorderen Bremskreis 10. Beim "normalen" Bremsen erfolgt der Ruckabbau über die Ventile 44a/46a bzw. 44b/46b. Nur im Regelungsfall, z.B. bei ABS erfolgt der Abbau über die Radauslassventile 54a und 54b in die Speicherkammer58.

Der Druck, welcher einem Einströmen von Bremsflüssigkeit in das Bremsmediumreservoir 24 entgegenwirkt, liegt unter dem in der Speicherkammer 58 herrschenden Druck. Aus diesem Grund lässt sich ein Teil der Bremsflüssigkeit vergleichsweise schnell aus dem hinteren Bremskreis 14 in das Bremsmediumreservoir 24 transferieren.

Die Leitung 66 verbindet das Bremsmediumreservoir 24 auch mit einem Verzweigungspunkt 67, an welchem zwei Radauslassventile 68a und 68b angekoppelt sind. Die Radauslassventile 68a und 68b sind jeweils einem Radbremszylinder einer Bremszange 62a oder 62b zugeordnet.

Parallel zu dem Druckstellventil 64 ist über einen Verzweigungspunkt 69 eine Pumpe 70 angeordnet. Die Pumpe 70 kann eine Einkolbenpumpe, eine Pumpe mit mehreren Kolben, eine asymmetrische Pumpe oder eine Zahnradpumpe sein. Über einen Verzweigungspunkt 71a ist eine Leitung 72 an eine Förderseite der Pumpe 70 angeschlossen, welche an einem Verzweigungspunkt 71b in eine Leitung 74 mündet, die von dem Trennventil 60 zu einem Radeinlassventil 76b führt.

Über einen Verzweigungspunkt 75 ist ein zweites Radeinlassventil 76a des hinteren Bremskreises 14 mit der Leitung 74 verbunden. Parallel zu den Radeinlassventilen 76a und 76b sind Bypassleitungen mit Rückschlagventilen 78a und 78b angeordnet. Die Radeinlassventile 76a und 76b sind jeweils über die Leitung 80a oder 80b an die Radbremszylinder der Bremszange 62a oder 62b angeschlossen. Die Radauslassventile 68a und 68b sind jeweils über einen Verzweigungspunkt 82a oder 82b mit der zugehörigen Leitung 80a oder 80b verbunden.

Die beiden Pumpen 48 und 70 sitzen auf einer gemeinsamen Welle, welche über einen Motor 84 betrieben wird. In einer kostengünstigen Ausführungsform kann der Motor 84 dazu ausgelegt sein, sich in nur eine Drehrichtung zu drehen.

Zusammenfassend lässt sich festhalten, dass das Druckstellventil 64 zusammen mit der Ansaugseite (Einlassseite) der Pumpe 70 und der Förderseite (Sekundärseite) der Auslassventile 68a und 68b direkt am Bremsmediumreservoir 24 angeschlossen ist. Damit ist das Einstellen eines gewünschten Bremsdrucks an den Radbremszylindern der Bremszangen 62a und 62b der Räder 16a und 16b über das Druckstellventil 64 möglich.

Die Ventile 60, 64, 68a, 68b, 76a und 76b sind Hydraulikventile. In einer bevorzugten Ausführungsform sind das Trennventil 60 und die Radeinlassventile 76a und 76b stromlos offene Ventile. In diesem Fall sind das Druckstellventil 64 und die Radauslassventile 68a und 68b vorteilhafterweise als stromlos geschlossene Ventile ausgebildet.

Im Weiteren wird eine bevorzugte Vorgehensweise zum Betreiben des hinteren Bremskreises 14 beschrieben:

Im ungebremsten Fall sind die Ventile 60, 64, 68a, 68b, 78a und 78b des hinteren Bremskreises 14 stromlos. Das nicht bestromte Trennventil 60 ist somit geöffnet und die hydraulische Verbindung zwischen dem Hauptbremszylinder 22 und dem hinteren Bremskreis 14, beziehungsweise zwischen dem Hauptbremszylinder 22 und den Radbremszylindern der Bremszangen 62a und 62b, ist vorhanden.

In der Regel wird nur in Situationen, in welchen der Fahrer das Bremspedal 18 oder ein anderes Bremsbetätigungsmoment betätigt, ein Stromsignal an die Ventile 60, 64, 68a, 68b, 78a und 78b von einer (nicht skizzierten) Steuerung des Bremssystems bereitgestellt. Das bestromte Trennventil 60 wird aufgrund des bereitgestellten Stromsignals geschlossen, wodurch der Hauptbremszylinder 22 von dem hinteren Bremskreis 14 abgekoppelt wird. Liegt diese Situation vor, so bremst der Fahrer über das Bremspedal 18 nur noch in den vorderen Bremskreis 10 direkt ein.

Gleichzeitig besteht die Möglichkeit, anhand der Betätigung des Bremspedals 18 durch den Fahrer über eine geeignete Sensorik festzustellen, welches Gesamtbremsmoment an den Rädern 12a, 12b, 16a und 16b in Hinblick auf die aktuelle Verkehrsituation vorteilhaft ist. Anschließend wird ein an den Rädern 12a und 12b vorliegender aktueller Bremsdruck ermittelt. Über eine Auswerteeinrichtung kann dann eine Bremsmoment-Differenz zwischen dem gewünschten Gesamtbremsmoment und dem auf die Räder 12a und 12b ausgeübte Bremsmoment berechnet werden. Die berechnete Bremsmoment-Differenz kann daraufhin mittels der Pumpe 70 und dem Druckstellventil 64 aktiv an den Rädern 16a und 16b eingestellt werden soll, damit der Bremswunsch des Fahrers optimal ausgeführt wird.

Soll der in dem hinteren Bremskreis 14 aufgebaute Bremsdruck abgebaut werden, so wird das Druckstellventil 64 entsprechend des abnehmenden Bremswunsches geöffnet. Ein Teil der Bremsflüssigkeit kann nun aus dem hinteren Bremskreis 14 schnell über das Druckstellventil 64 in das Bremsmediumreservoir 24 zurückströmen.

Im Weiteren wird beispielhaft erläutert, wie das in Fig. 1 dargestellte Bremssystem für ein rekuperatives Bremsen verwendbar ist. Dazu ist der hintere Bremskreis 14 an einen während des rekuperativen Bremsens als Generator fungierenden Elektromotor angeschlossen. Während des rekuperativen Bremsens wirkt somit ein nicht konstantes Bremsmoment des Generators auf die Räder 16a und 16b.

Mittels einer geeigneten Sensorik lässt sich ermitteln, welches Gesamtbremsmoment vom Fahrer gewünscht wird. Ebenso lassen sich auf die Räder 12a und 12b mittels der konventionellen Reibungsbremse und auf die Räder 16a und 16b mittels der rekuperativen Bremse ausgeübten Bremsmomente ermitteln. Eine Auswerteeinrichtung kann nun die Bremsmoment-Differenz zwischen dem vom Fahrer gewünschten Gesamtbremsmoment und den an den Rädern 12a, 12b, 16a und 16b anliegenden Bremsmomente berechnen. Diese Bremsmoment-Differenz wird anschließend entsprechend der oben beschriebenen Vorgehensweise an den Rädern 16a und 16b eingestellt. Der hier beschriebene Verblendungsvorgang wird vom Fahrer kaum wahrgenommen und beeinträchtigt damit auch nicht den Fahrkomfort.

In einer bevorzugten Ausführungsform kann die Einstellung des Bremsdrucks an der Hinterachse mittels einer delta-p-Ansteuerung des Druckstellventils 64 erfolgen. Als Alternative dazu ist auch eine Druckregelung des Bremsdrucks an der Hinterachse möglich. Dazu ist mindestens ein Drucksensor im Bereich mindestens eines der Räder 16a oder 16b und/oder im Hinterachskreis angeordnet.

In der Rückfallebene sind alle Ventile 60, 64, 68a, 68b, 78a und 78b stromlos. Bei einem Defekt an mindestens einem der beiden Radauslassventile 68a und 68b und/oder des Druckstellventils 64 kann ein Bremsflüssigkeitsstrom direkt in das Bremsmediumreservoir 24 einströmen. Um einen Komplettausfall der Bremszangen 62a und 62b zu verhindern, besteht die Möglichkeit, die Funktion der Rückfallebene zu überwachen. Dabei kann beispielsweise eine Druckgradientenüberwachung des an den Rädern 16a und 16b vorliegenden Bremsdruckes ausgeführt werden. Entsprechend lässt sich auch die Dichtheit des hinteren Bremskreises 14 überwachen.

In den oberen Absätzen ist ein Vorgang zum rekuperativen Bremsen mit einem Bremssystem beschrieben, an dessen hinteren Bremskreis 14 ein Generator angeschlossen ist.

Mittels des beschriebenen Verfahrens ist es auch möglich, eine bevorzugte Bremskraftverteilung an den Rädern des Fahrzeugs bei einem Bremsen während einer Kurvenfahrt und/oder während einer Rückwärtsfahrt einzustellen. Beispiele dafür sind die schon genannte querbeschleunigungsabhängige Bremskraftverteilung, das dynamische Kurvenbremsen und/oder die Erhöhung der Bremskraft an der Hinterachse beim Bremsen während einer Rückwärtsfahrt.

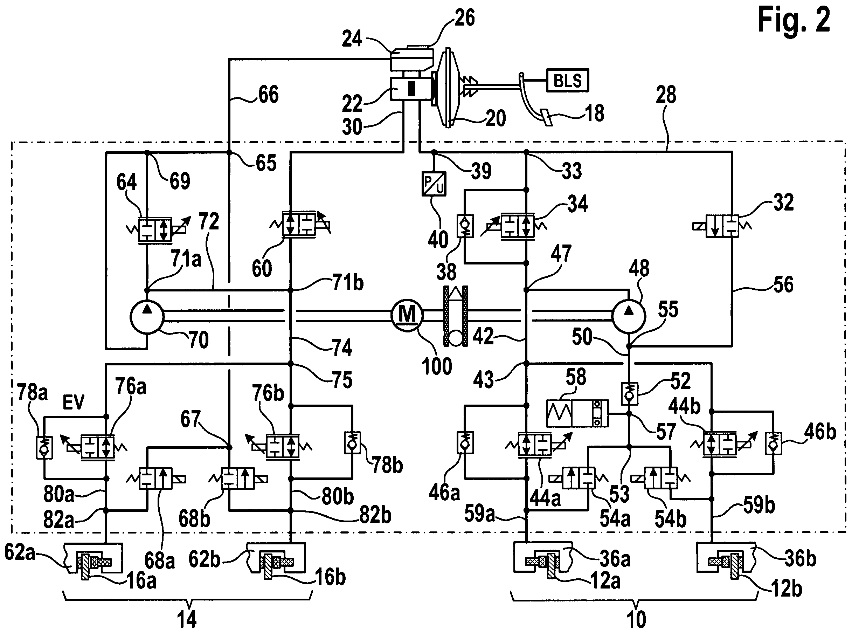

Fig. 2 zeigt einen Schaltplan einer zweiten Ausführungsform des Bremssystems.

Das in Fig. 2 dargestellte Bremssystem weist die schon beschriebenen Komponenten 10 bis 82 des Bremssystems der Fig. 1 auf. Allerdings hat das Bremssystem der Fig. 2 im Gegensatz zu dem Bremssystem der Fig. 1 einen Motor 100, welcher sich in eine erste und in eine entgegen gesetzte zweite Drehrichtung drehen kann. Der Motorpfad ist damit so ausgestattet, dass ein Vorwärts- und Rückwärtslaufen des Motors 100 möglich ist. Zusätzlich ist zwischen dem Motor 100 und der Pumpe 48 des vorderen Bremskreises 10 ein Freilauf ausgebildet. Der Freilauf ist so ausgebildet, dass er sich öffnet, sobald der Motor 100 in seiner ersten Drehrichtung betrieben wird.

In einer Situation, in welcher ein Bremsdruck nur an den Rädern 16a und 16b aufgebaut werden soll, wird der Motor 100 in seiner ersten Drehrichtung, vorzugsweise im Rückwärtsbetrieb, betrieben. Damit öffnet sich der Freilauf und die mechanische Verbindung zwischen dem Motor 100 und der Pumpe 48 des vorderen Bremskreises 10 wird unterbrochen. Aus diesem Grund wird bei einem Betreiben des Motors 100 in seiner ersten Drehrichtung nur die Pumpe 70 des hinteren Bremskreises 14 angetrieben.

Auf diese Weise wird ein zwangsweises Mitbetreiben der Pumpe 48 zusammen mit der Pumpe 70 verhindert, obwohl beide Pumpen 48 und 70 auf einer gemeinsamen Welle sitzen und von demselben Motor 100 antreibbar sind. Dies verhindert, dass es aufgrund eines zwangsweisen Mitbetreibens der Pumpe 48 zu einer nicht notwendigen Volumenförderung im vorderen Bremskreis 10 kommt. Herkömmlicherweise ist diese nicht notwendige Volumenförderung im vorderen Bremskreis 10 mit Pedalpulsationen und/oder Druckausgleichsvorgängen verbunden. Durch ein Unterbinden des zwangsweisen Mitbetreibens der Pumpe 48 kann somit der Fahrkomfort gesteigert werden.

Wird hingegen ein Betreiben von beiden Pumpen 48 und 70 gewünscht, so wird der Motor 100 in seiner zweiten Drehrichtung, vorzugsweise im Vorwärtsbetrieb, betrieben. Bei einem Drehen des Motors 100 in seiner zweiten Drehrichtung werden somit beide Pumpen 48 und 70 mit der gleichen Drehzahl angetrieben. Dies ermöglicht einen 2-kreisigen Druckaufbau und/oder z.B. eine ABS-Regelungen.

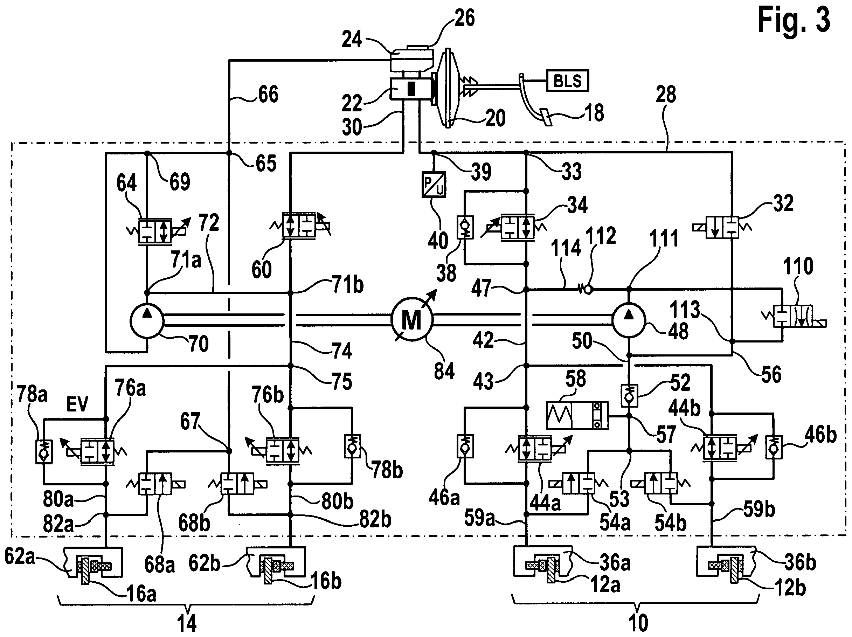

Fig. 3 zeigt einen Schaltplan einer dritten Ausführungsform des Bremssystems. Dieses Bremssystem eignet sich besonders gut für eine ABS-Regelung.

Das in Fig. 3 dargestellte Bremssystem weist die schon beschriebenen Komponenten 10 bis 84 des Bremssystems der Fig. 1 auf. Als Ergänzung zu dem Bremssystem der Fig. 1 umfasst das Bremssystem der Fig. 2 zusätzlich ein Ventil 110 und ein Rückschlagventil 112.

Das Ventil 110 ist über einen Verzweigungspunkt 111 an einer Leitung 114 angeschlossen, welche von der Leitung 42 zu einem Eingang der Pumpe 48 führt. Des Weiteren ist das Ventil 110 über einen Verzweigungspunkt 113 an die Leitung 56 gekoppelt. Durch das Einbringen des Ventils 110 in den vorderen Bremskreis 10 wird die Förderseite (Pumpenauslassseite) der Pumpe 48 über das Ventil 110 mit der Saugseite (Pumpeneinlassseite) der Pumpe 48 verbunden. Das Rückschlagventil 112 ist in die Leitung 114 eingesetzt.

In einer Situation, in welcher ein Druckaufbau nur an den Rädern 16a und 16b gewünscht wird, wird das Ventil 110 geöffnet. Dadurch fördert die Pumpe 48, welche über den Motor 84 zusammen mit der Pumpe 70 betrieben wird, nur im Kreis und verhindert somit einen Druckaufbau an den Rädern 12a und 12b. Durch das Rückschlagventil 112 ist der Fahrer von der Pumpenpulsation abgekoppelt. Auf diese Weise ist es möglich, Pedalpulsationen trotz eines zwangsweisen Mitbetreibens der Pumpe 48 zusammen mit der Pumpe 70 zu minimieren oder zu verhindern.

Wird hingegen ein Druckaufbau an allen Rädern 12a, 12b, 16a und 16b gewünscht, so wird das Ventil 110 nicht angesteuert und bleibt damit geschlossen. Ein Betreiben des Motors 84 bewirkt in diesem Fall während eines Antreibens beider Pumpen 48 und 70 einen Druckaufbau in den beiden Bremskreisen 10 und 14.

## Patentansprüche

1. Bremssystem für ein Fahrzeug mit
einem Hauptbremszylinder (22), welcher dazu ausgelegt ist, eine Betätigung eines Bremseingabeelements (18) zu erfassen und ein der Betätigung des Bremseingabeelements (18) entsprechendes Drucksignal bereitzustellen;
einem an den Hauptbremszylinder (22) angeschlossenen Bremsmediumreservoir (24) zum Aufnehmen eines Bremsmediums; und
einem ersten Bremskreis (14), welcher mit einem ersten Eingang an den Hauptbremszylinder (22) und mit einem zweiten Eingang an das Bremsmediumreservoir (24) angekoppelt ist, mit
einem an einem ersten Rad (16a) angeordneten ersten Radbremszylinder (62a) und einem an einem zweiten Rad (16b) angeordneten zweiten Radbremszylinder (62b), welche so mit dem ersten Eingang verbunden sind, dass das Drucksignal von dem Hauptbremszylinder (22) an den ersten Radbremszylinder (62a) und an den zweiten Radbremszylinder (62b) weiterleitbar ist, und welche dazu ausgelegt sind, eine dem Drucksignal entsprechende Kraft auf das zugeordnete erste oder zweite Rad (16a, 16b) auszuüben;
einem zwischen dem ersten Eingang, dem ersten Radbremszylinder (62a) und dem zweiten Radbremszylinder (62b) angeordneten Trennventil (60), welches dazu ausgelegt ist, bei Empfang eines bereitgestellten Schließsignals das Weiterleiten des Drucksignals an den ersten Radbremszylinder (62a) und an den zweiten Radbremszylinder (62b) zu verhindern; und
einem zwischen dem zweiten Eingang, dem ersten Radbremszylinder (62a) und dem zweiten Radbremszylinder (62b) angeordneten Steuerventil (64), welches dazu ausgelegt ist, einen Zufluss des Bremsmediums von dem Bremsmediumreservoir (24) zu dem ersten Radbremszylinder (62a) und dem zweiten Radbremszylinder (62b) zu steuern, wobei das Steuerventil (64) ein stetig verstellbares Ventil (64) ist,
wobei keine Bypassleitung mit einem Rückschlagventil parallel zu dem Trennventil (60) angeordnet ist, und der erste Radbremszylinder (62a) und der zweite Radbremszylinder (62b) durch ein Schließen des Trennventils (60) von dem Hauptbremszylinder (22) so abkoppelbar sind, dass ein Weiterleiten des Drucksignals an den ersten Radbremszylinder (62a) und den zweiten Radbremszylinder (62b) verhindert ist,
wobei zwischen dem zweiten Eingang des ersten Bremskreises (14) und dem Steuerventil (64) ein erster Verzweigungspunkt (65) angeordnet ist, und wobei der erste Radbremszylinder (62a) und der zweite Radbremszylinder (62b) so an den ersten Verzweigungspunkt (65) angekoppelt sind, dass ein Abfluss des Bremsmediums von dem ersten Radbremszylinder (62a) und dem zweiten Radbremszylinder (62b) zu dem Bremsmediumreservoir (24) an dem Steuerventil (64) vorbei geleitet wird, indem zwischen dem ersten Verzweigungspunkt (65) und dem ersten Radbremszylinder (62a) ein erstes Radauslassventil (68a) und zwischen dem ersten Verzweigungspunkt (65) und dem zweiten Radbremszylinder (62b) ein zweites Radauslassventil (68b) angeordnet sind, welche dazu ausgelegt sind, den Abfluss des Bremsmediums von dem ersten Radbremszylinder (62a) und dem zweiten Radbremszylinder (62b) vorbei an dem Steuerventil (64) zu dem Bremsmediumreservoir (24) zu steuern,
wobei ein Ausgang des Steuerventils (64) und ein Ausgang des Trennventils (60) an einem zweiten Verzweigungspunkt (71b) angekoppelt sind, und wobei zwischen dem zweiten Verzweigungspunkt (71b) und dem ersten Radbremszylinder (62a) ein erstes Radeinlassventil (76a) und zwischen dem zweiten Verzweigungspunkt (71b) und dem zweiten Radbremszylinder (62b) ein zweites Radeinlassventil (76b) angeordnet sind, welche dazu ausgelegt sind, einen Zufluss des Bremsmediums von dem zweiten Verzweigungspunkt (71b) an den ersten Radbremszylinder (62a) und an den zweiten Radbremszylinder (62b) zu steuern,
wobei zwischen dem zweiten Eingang des ersten Bremskreises (14) und dem Steuerventil (64) ein dritter Verzweigungspunkt (69) angeordnet ist, an welchem eine Saugseite einer ersten Pumpe (70) angekoppelt ist, und wobei die Förderseite der ersten Pumpe (70) an das erste Radeinlassventil (76a,76b) angekoppelt ist,
wobei das Bremssystem einen zweiten Bremskreis (10) umfasst, welcher an den Hauptbremszylinder (22) gekoppelt ist, mit einem an einem dritten Rad (12a) angeordneten dritten Radbremszylinder (36a) und einem an einem vierten Rad (12b) angeordneten vierten Radbremszylinder (36b), welche so mit dem Hauptbremszylinder (22) verbunden sind, dass das Drucksignal von dem Hauptbremszylinder (22) an den dritten Radbremszylinder (36a) und an dem vierten Radbremszylinder (36b) weiterleitbar ist, und welche dazu ausgelegt sind, eine dem Drucksignal entsprechende Kraft auf das zugeordnete dritte oder vierte Rad (12a, 12b) auszuüben,
**dadurch gekennzeichnet, dass**
der zweite Bremskreis (10) eine zweite Pumpe (48), ein dem dritten Radbremszylinder (36a) zugeordnetes drittes Radeinlassventil (44a) und ein dem vierten Radbremszylinder (36b) zugeordnetes viertes Radeinlassventil (44b) aufweist, und von einer Saugseite der zweiten Pumpe (48) eine erste Leitung (50) über ein Rückschlagventil (52) zu einem vierten Verzweigungspunkt (53) verläuft, an welchen ein dem dritten Radbremszylinder (36a) zugeordnetes drittes Radauslassventil (54a) und ein dem vierten Radbremszylinder (36b) zugeordnetes viertes Radauslassventil (54b) angebunden sind;
das Steuerventil (64) ein stromlos geschlossenes stetig verstellbares Ventil (64) ist,
eine Zufuhrleitung (28) zwischen dem Hauptbremszylinder (22) und einem Hochdruckschaltventil (32) des zweiten Bremskreises (10) verläuft und über einen fünften Verzweigungspunkt (33) zusätzlich ein Umschaltventil (34) des zweiten Bremskreises (10) an die Zufuhrleitung (28) angeschlossen ist, und von einer der Zufuhrleitung (28) abgewandten Seite des Umschaltventils (34) eine zweite Leitung (42) zu dem dritten Radeinlassventil (44a) verläuft, an welche das vierte Radeinlassventil (44b) und einer Förderseite der zweiten Pumpe (48) angeschlossen ist, und
parallel zu dem Umschaltventil (34) des zweiten Bremskreises (10) eine Bypassleitung mit einem Rückschlagventil (38) angeordnet ist,
wobei das Bremssystem eine Auswerteeinrichtung umfasst, mittels welcher eine Bremsmoment-Differenz zwischen einem mittels einer Betätigung eines Bremspedals (18) durch einen Fahrer eingegebenen Gesamtbremsmoment und einem mittels des dritten Radbremszylinders (36a) auf das dritte Rad (12a), des vierten Radbremszylinders (36b) auf das vierte Rad (12b) und einer rekuperativen Bremse auf das erste Rad (16a) und auf das zweite Rad (16b) ausgeübten Bremsmoments ermittelbar ist, und die Bremsmoment-Differenz mittels der ersten Pumpe (70) und dem Steuerventil (64) durch einen Druck in dem ersten Radbremszylinder (62a) und in dem zweiten Radbremszylinder (62b) aktiv an dem ersten Rad (16a) und an dem zweiten Rad (16b) einstellbar ist.

2. Bremssystem nach Anspruch 1, wobei das Bremssystem einen Motor (100) aufweist, welcher in einer ersten Drehrichtung und in einer zweiten Drehrichtung betreibbar ist, wobei bei einem Betreiben des Motors (100) in der ersten Drehrichtung die erste Pumpe (70) durch den Motor betreibbar und die zweite Pumpe (48) von dem Motor (100) abgekoppelt ist und bei einem Betreiben des Motors (100) in der zweiten Drehrichtung die ersten und die zweite Pumpe (48,70) durch den Motor (100) betreibbar sind.

## Claims

1. Brake system for a vehicle having
a brake master cylinder (22) which is designed to detect an actuation of a brake input element (18) and to provide a pressure signal which corresponds to the actuation of the brake input unit (18);
a brake medium reservoir (24) which is connected to the brake master cylinder (22) for receiving a brake medium; and
a first brake circuit (14) which is coupled by way of a first input to the brake master cylinder (22) and by way of a second input to the brake medium reservoir (24), having
a first wheel brake cylinder (62a) which is arranged at a first wheel (16a) and a second wheel brake cylinder (62b) which is arranged at a second wheel (16b), which wheel brake cylinders (62a, 62b) are connected to the first input in such a way that the pressure signal can be forwarded from the brake master cylinder (22) to the first wheel brake cylinder (62a) and to the second wheel brake cylinder (62b), and which wheel brake cylinders (62a, 62b) are designed to exert a force which corresponds to the pressure signal on the associated first or second wheel (16a, 16b);
a separating valve (60) which is arranged between the first input, the first wheel brake cylinder (62a) and the second wheel brake cylinder (62b) and is designed to prevent the forwarding of the pressure signal to the first wheel brake cylinder (62a) and to the second wheel brake cylinder (62b) if a provided closing signal is received; and
a control valve (64) which is arranged between the second input, the first wheel brake cylinder (62a) and the second wheel brake cylinder (62b) and is designed to control an inflow of the brake medium from the brake medium reservoir (24) to the first wheel brake cylinder (62a) and the second wheel brake cylinder (62b), the control valve (64) being a steplessly adjustable valve (64),
no bypass line with a check valve being arranged parallel to the separating valve (60), and it being possible for the first wheel brake cylinder (62a) and the second wheel brake cylinder (62b) to be decoupled from the brake master cylinder (22) by way of a closure of the separating valve (60), in such a way that forwarding of the pressure signal to the first wheel brake cylinder (62a) and the second wheel brake cylinder (62b) is prevented,
a first branching point (65) being arranged between the second input of the first brake circuit (14) and the control valve (64), and the first wheel brake cylinder (62a) and the second wheel brake cylinder (62b) being coupled to the first branching point (65) in such a way that an outflow of the brake medium from the first wheel brake cylinder (62a) and the second wheel brake cylinder (62b) to the brake medium reservoir (24) is guided past the control valve (64), by a first wheel outlet valve (68a) being arranged between the first branching point (65) and the first wheel brake cylinder (62a) and a second wheel outlet valve (68b) being arranged between the first branching point (65) and the second wheel brake cylinder (62b), which wheel outlet valves (68a, 68b) are designed to control the outflow of the brake medium from the first wheel brake cylinder (62a) and the second wheel brake cylinder (62b) past the control valve (64) to the brake medium reservoir (24),
an output of the control valve (64) and an output of the separating valve (60) being coupled at a second branching point (71b), and a first wheel inlet valve (76a) being arranged between the second branching point (71b) and the first wheel brake cylinder (62a) and a second wheel inlet valve (76b) being arranged between the second branching point (71b) and the second wheel brake cylinder (62b), which wheel inlet valves (76a, 76b) are designed to control an inflow of the brake medium from the second branching point (71b) to the first wheel brake cylinder (62a) and to the second wheel brake cylinder (62b),
a third branching point (69) being arranged between the second input of the first brake circuit (14) and the control valve (64), at which third branching point (69) a suction side of a first pump (70) is coupled, and the delivery side of the first pump (70) being coupled to the first wheel inlet valve (76a, 76b),
the brake system comprising a second brake circuit (10) which is coupled to the brake master cylinder (22), having a third wheel brake cylinder (36a) which is arranged at a third wheel (12a) and a fourth wheel brake cylinder (36b) which is arranged at a fourth wheel (12b), which wheel brake cylinders (36a, 36b) are connected to the brake master cylinder (22) in such a way that the pressure signal can be forwarded from the brake master cylinder (22) to the third wheel brake cylinder (36a) and to the fourth wheel brake cylinder (36b), and which wheel brake cylinders (36a, 36b) are designed to exert a force which corresponds to the pressure signal on the associated third or fourth wheel (12a, 12b),
**characterized in that**
the second brake circuit (10) has a second pump (48), a third wheel inlet valve (44a) which is assigned to the third wheel brake cylinder (36a), and a fourth wheel inlet valve (44b) which is assigned to the fourth wheel brake cylinder (36b), and a first line (50) runs from a suction side of the second pump (48) via a check valve (52) to a fourth branching point (53), to which a third wheel outlet valve (54a) which is assigned to the third wheel brake cylinder (36a) and a fourth wheel outlet valve (54b) which is assigned to the fourth wheel brake cylinder (36b) are attached;
the control valve (64) is a normally closed steplessly adjustable valve (64),
a feed line (28) runs between the brake master cylinder (22) and a high pressure switching valve (32) of the second brake circuit (10), and, in addition, a switchover valve (34) of the second brake circuit (10) is connected via a fifth branching point (33) to the feed line (28), and a second line (42) runs from a side of the switchover valve (34) which faces away from the feed line (28) to the third wheel inlet valve (44a), to which the fourth wheel inlet valve (44b) and a delivery side of the second pump (48) are connected, and
a bypass line having a check valve (38) is arranged parallel to the switchover valve (34) of the second brake circuit (10),
the brake system comprising an evaluation device, by means of which a braking moment difference can be determined between an overall braking moment which is input by a driver by means of an actuation of a brake pedal (18) and a braking moment which is exerted by means of the third wheel brake cylinder (36a) on the third wheel (12a), by means of the fourth wheel brake cylinder (36b) on the fourth wheel (12b) and by means of a recuperative brake on the first wheel (16a) and on the second wheel (16b), and it being possible for the braking moment difference to be set actively. at the first wheel (16a) and at the second wheel (16b) by means of the first pump (70) and the control valve (64) by way of a pressure in the first wheel brake cylinder (62a) and in the second wheel brake cylinder (62b).

2. Brake system according to Claim 1, the brake system having a motor (100) which can be operated in a first rotational direction and in a second rotational direction, it being possible for the first pump (70) to be operated by way of the motor and the second pump (48) being decoupled from the motor (100) during operation of the motor (100) in the first rotational direction, and it being possible for the first and the second pump (48, 70) to be operated by way of the motor (100) during operation of the motor (100) in the second rotational direction.

## Revendications

1. Système de freinage pour un véhicule, avec
un maître-cylindre de frein (22), qui est conçu pour détecter un actionnement d'un élément d'entrée de freinage (18) et pour fournir un signal de pression correspondant à l'actionnement de l'élément d'entrée de freinage (18),
un réservoir de liquide de frein (24) raccordé au maître-cylindre de frein (22), destiné à contenir un liquide de frein; et
un premier circuit de freinage (14), qui est couplé par une première entrée au maître-cylindre de frein (22) et par une deuxième entrée au réservoir de liquide de frein (24), avec
un premier cylindre de frein de roue (62a) disposé à une première roue (16a) et un deuxième cylindre de frein de roue (62b) disposé à une deuxième roue (16b), qui sont raccordés à la première entrée de telle manière que le signal de pression puisse être retransmis du maître-cylindre de frein (22) au premier cylindre de frein de roue (62a) et au deuxième cylindre de frein de roue (62b), et qui sont conçus pour exercer sur la première roue ou la deuxième roue associée (16a, 16b) une force correspondant au signal de pression;
une soupape de séparation (60) disposée entre la première entrée, le premier cylindre de frein de roue (62a) et le deuxième cylindre de frein de roue (62b), qui est conçue pour empêcher, lors de la réception d'un signal de fermeture fourni, la retransmission du signal de pression au premier cylindre de frein de roue (62a) et au deuxième cylindre de frein de roue (62b); et
une soupape de commande (64) disposée entre la deuxième entrée, le premier cylindre de frein de roue (62a) et le deuxième cylindre de frein de roue (62b), qui est conçue pour commander un afflux du liquide de frein du réservoir de liquide de frein (24) au premier cylindre de frein de roue (62a) et au deuxième cylindre de frein de roue (62b), dans lequel la soupape de commande (64) est une soupape réglable en continu (64);
dans lequel aucune conduite de dérivation avec un clapet antiretour n'est disposée parallèlement à la soupape de séparation (60), et le premier cylindre de frein de roue (62a) et le deuxième cylindre de frein de roue (62b) peuvent être déconnectés du maître-cylindre de frein (22) par une fermeture de la soupape de séparation (60), de telle manière qu'une retransmission du signal de pression au premier cylindre de frein de roue (62a) et au deuxième cylindre de frein de roue (62b) soit empêchée;
dans lequel un premier point de branchement (65) est disposé entre la deuxième entrée du premier circuit de freinage (14) et la soupape de commande (64), et dans lequel le premier cylindre de frein de roue (62a) et le deuxième cylindre de frein de roue (62b) sont couplés au premier point de branchement (65), de telle manière qu'un reflux du liquide de frein du premier cylindre de frein de roue (62a) et du deuxième cylindre de frein de roue (62b) vers le réservoir de liquide de frein (24) soit conduit à l'écart de la soupape de commande (64), du fait qu'une première soupape de sortie de roue (68a) est disposée entre le premier point de branchement (65) et le premier cylindre de frein de roue (62a) et qu'une deuxième soupape de sortie de roue (68b) est disposée entre le premier point de branchement (65) et le deuxième cylindre de frein de roue (62b), lesquelles sont conçues pour commander le reflux du liquide de frein du premier cylindre de frein de roue (62a) et du deuxième cylindre de frein de roue (62b) à l'écart de la soupape de commande (64) vers le réservoir de liquide de frein (24),
dans lequel une sortie de la soupape de commande (64) et une sortie de la soupape de séparation (60) sont couplées à un deuxième point de branchement (71b), et dans lequel une première soupape d'entrée de roue (76a) est disposée entre le deuxième point de branchement (71b) et le premier cylindre de frein de roue (62a) et une deuxième soupape d'entrée de roue (76b) est disposée entre le deuxième point de branchement (71b) et le deuxième cylindre de frein de roue (62b), lesquelles sont conçues pour commander un afflux du liquide de frein du deuxième point de branchement (71b) au premier cylindre de frein de roue (62a) et au deuxième cylindre de frein de roue (62b),
dans lequel un troisième point de branchement (69) est disposé entre la deuxième entrée du premier circuit de freinage (14) et la soupape de commande (64), auquel un côté d'aspiration d'une première pompe (70) est couplé, et dans lequel le côté de refoulement de la première pompe (70) est couplé à la première soupape d'entrée de roue (76a, 76b),
dans lequel le système de freinage comprend un deuxième circuit de freinage (10), qui est raccordé au maître-cylindre de frein (22), avec un troisième cylindre de frein de roue (36a) disposé à une troisième roue (12a) et un quatrième cylindre de frein de roue (36b) disposé à une quatrième roue (12b), qui sont raccordés au maître-cylindre de frein (22), de telle manière que le signal de pression puisse être retransmis du maître-cylindre de frein (22) au troisième cylindre de frein de roue (36a) et au quatrième cylindre de frein de roue (36b), et qui sont conçus pour exercer sur la troisième ou la quatrième roue associée (12a, 12b) une force correspondant au signal de pression,
**caractérisé en ce que**
le deuxième circuit de freinage (10) présente une deuxième pompe (48), une troisième soupape d'entrée de roue (44a) associée au troisième cylindre de frein de roue (36a) et une quatrième soupape d'entrée de roue (44b) associée au quatrième cylindre de frein de roue (36b), et une première conduite (50) part d'un côté d'aspiration de la deuxième pompe (48) via un clapet antiretour (52) jusqu'à un quatrième point de branchement (53), auquel une troisième soupape de sortie de roue (54a) associée au troisième cylindre de frein de roue (36a) et une quatrième soupape de sortie de roue (54b) associée au quatrième cylindre de frein de roue (36b) sont connectées;
la soupape de commande (64) est une soupape réglable en continu fermée sans courant (64),
une conduite d'alimentation (28) s'étend entre le maître-cylindre de frein (22) et une soupape de commande à haute pression (32) du deuxième circuit de freinage (10) et en outre une soupape d'inversion (34) du deuxième circuit de freinage (10) est raccordée à la conduite d'alimentation (28) par un cinquième point de branchement (33), et une deuxième conduite (42) part d'un côté de la soupape d'inversion (34) opposé à la conduite d'alimentation (28) jusqu'à la troisième soupape d'entrée de roue (44a), à laquelle la quatrième soupape d'entrée de roue (44b) et un côté de refoulement de la deuxième pompe (48) sont raccordés, et
une conduite de dérivation avec un clapet antiretour (38) est disposée en parallèle à la soupape d'inversion (34) du deuxième circuit de freinage (10),
dans lequel le système de freinage comprend un dispositif d'évaluation, au moyen duquel on peut déterminer une différence de couple de freinage entre un couple de freinage global introduit par un conducteur au moyen d'un actionnement d'une pédale de frein (18) et un couple de freinage exercé au moyen du troisième cylindre de frein de roue (36a) sur la troisième roue (12a), au moyen du quatrième cylindre de frein de roue (36b) sur la quatrième roue (12b) et au moyen d'un frein à récupération sur la première roue (16a) et sur la deuxième roue (16b), et on peut régler la différence de couple de freinage activement à la première roue (16a) et à la deuxième roue (16b) au moyen de la première pompe (70) et de la soupape de commande (64) par une pression dans le premier cylindre de frein de roue (62a) et dans le deuxième cylindre de frein de roue (62b).

2. Système de freinage selon la revendication 1, dans lequel le système de freinage présente un moteur (100), qui peut fonctionner dans un premier sens de rotation et dans un deuxième sens de rotation, dans lequel, lors d'un fonctionnement du moteur (100) dans le premier sens de rotation la première pompe (70) peut être entraînée par le moteur et la deuxième pompe (48) est déconnectée du moteur (100), et lors d'un fonctionnement du moteur (100) dans le deuxième sens de rotation la première et la deuxième pompes (48, 70) peuvent être entraînées par le moteur (100).
